# EUROPEAN PATENT APPLICATION

(11) **EP 3 690 416 A1**
(43) Date of publication of application: **05.08.2020**
(21) Application number: 18860496.1
(22) Date of filing: 27.09.2018
(51) Int. Cl.: G01L 5/10

(54) **WIRE-ROD TENSIOMETER**

(30) Priority: 28.09.2017 JP 2017187460
(71) Applicant: Nagaki Seiki Co., Ltd., Daito-shi Osaka 574-0045 (JP)
(72) Inventor: NOGAWA, Yasutsugu, Daito-shi, Osaka 574-0045 (JP)
(74) Representative: Stöckeler, Ferdinand
(86) International application number: PCT/JP2018/035826
(87) International publication number: WO 2019/065790

(57) **Abstract**

To provide a tension measuring device which can be easily carried, maintenance of which can be easily performed, and which measures a tension of a wire material to be measured and can prevent the wire material to be measured from being damaged.

A tension measuring device (10) for a wire material according the invention includes a tension measuring unit (12) having a measuring pulley (20) measuring a wire material to be measured (C) while being curved and one pair of guide pulleys (22, 24) guiding the wire material to be measured (C), and
a tension display unit (14) electrically connected to the tension measuring unit.
The guide pulleys (22, 24) are disposed to be divided back and forth into an incoming side and an outgoing side to sandwich the measuring pulley (20) therebetween,
the tension measuring unit (12) is configured to curve the wire material to be measured (C) at the measuring pulley (20), convert force restoring the curved wire material to be measured to the straight wire material into an electric signal by a tension detecting sensor (26), and transmit the electric signal to the tension display unit (14), and
the tension display unit (14) is configured to display the electric signal transmitted by the tension measuring unit (12) by the disposed display unit (100).

## Description

### Technical Field

The present invention relates to a tension measuring device for a wire material and, more particularly, to a tension measuring device for a wire material which measures a tension of a wire material to be measured, for example, an electric wire such as a cable or a wire rope.

### Background Art

As a measuring device used to measure a tension of a wire material to be measured such as a cable in a line construction of a cable into an underground tube or the like, a pulley tension meter is used.

### Conventional Art Document

### Patent Document

Japanese Examined Utility Model Application Publication No. 6-9349

### Summary of the Invention

### [Problem to be Solved by the Invention]

In a pull-in operation of a cable in a line construction of the cable into an underground tube, friction occurs between the inner surface of a pipe line and the outer sheath of the cable, a pull-in tension of the cable at a bent part of the tube increases, and a side pressure acts on the cable.

When the side pressure overruns, the sheath configuring the cable, a shield material such as a copper tape, an insulating inclusion, a core wire, and the like may be damaged.

Thus, the tension is monitored during the pull-in operation of the cable, and the tension must be managed. When a line construction is performed while the tension of the cable is measured, the cable is consequently prevented from being damaged.

However, although a tension measuring device must be carried to a construction site with a vehicle, since the tension measuring device is installed in the vehicle which performs the line construction of a cable into an underground tube, the tension measuring device must be prevented from being directly damaged by impact shock and vibration.

A tension measuring device which can be checked and replaced by itself and maintenance of which can be easily performed is required.

With the passage of years from laying of an existing electric wire or a wire, the wire may expand and contract, the wire may be tightened by the conventional tension (specific tension). For this reason, the tension of a laid line material to be measured such as an existing electric wire or a wire must be measured.

This invention has been made in consideration of the above circumstances, and has as its object to provide a tension measuring device which can be easily carried, maintenance of which can be easily performed, and which measures a tension of a wire material to be measured and can prevent the wire material to be measured from being damaged.

### Means for Solving the Problem

A tension measuring device for a wire material according to claim 1 of the invention is a tension measuring device for a wire material including a tension measuring unit having a measuring pulley measuring a wire material to be measured while being curved and one pair of guide pulleys guiding the wire material to be measured, and
a tension display unit electrically connected to the tension measuring unit, wherein
the guide pulleys are disposed to be divided back and forth into an incoming side and an outgoing side to sandwich the measuring pulley therebetween,
the tension measuring unit is configured to curve the wire material to be measured passing through the guide pulleys at the measuring pulley, convert force restoring the curved wire material to be measured to the straight wire material into an electric signal by a tension detecting sensor, and transmit the electric signal to the tension display unit, and
the tension display unit is configured to display the electric signal transmitted by the tension measuring unit by the disposed display unit.

A tension measuring device for a wire material according to claim 2 of the invention is the tension measuring device for a wire material described in claim 1, wherein
distance measuring sensors are disposed to be divided back and forth to sandwich a rotating shaft of the measuring pulley, and
a distance of a wiring is determined by a product of a circumference of the pulley calculated by an internal diameter of a groove of the measuring pulley and a diameter of the wire material to be measured and a rotation number counted by the distance measuring sensors to display the distance of the wiring on the tension display unit.

A tension measuring device for a wire material according to claim 3 of the invention is the tension measuring device for a wire material described in claim 1, wherein
a lower part of a groove in which the wire material to be measured in the measuring pulley is caused to pass is disposed to be located below an upper part of a groove in which the wire material to be measured in the guide pulley is caused to pass, and
the wire material to be measured caused to pass from the guide pulley reaches the lower part of the groove of the measuring pulley and is curved into almost a U shape by the measuring pulley to apply an upward pressure to a tension detecting sensor configuring the rotating shaft of the measuring pulley.

A tension measuring device for a wire material according to claim 4 of the invention is the tension measuring device for a wire material described in claim 1 or claim 3, wherein the rotating shaft of the measuring pulley and the rotating shaft of the guide pulley are installed between one pair of side plates disposed with a space, and the wire material to be measured is guided along the groove from the upper side of the guide pulley and guided along the lower part of the groove of the measuring pulley.

Since the tension measuring device for a wire material according to the invention is a tension measuring device for a wire material including a tension measuring unit having a measuring pulley measuring a wire material to be measured while curving the wire material and one pair of guide pulleys guiding the wire material to be measured, and
a tension display unit electrically connected to the tension measuring unit, wherein
the guide pulleys are disposed to be divided back and forth into an incoming side and an outgoing side to sandwich the measuring pulley therebetween,
the tension measuring unit is configured to curve the wire material to be measured passing through the guide pulleys at the measuring pulley, convert force restoring the curved wire material to be measured to the straight wire material into an electric signal, and transmit the electric signal to the tension display unit, and
the tension display unit is configured to display the electric signal transmitted by the tension measuring unit by the disposed display unit, the tension measuring unit and the tension display unit can be easily separately carried, maintenance can be easily performed, and a tension of the wire material to be measured can be measured to make it possible to prevent the wire material to be measured from being damaged.

Distance measuring sensors are disposed to be divided back and forth to sandwich a rotating shaft of the measuring pulley, and
a distance of a wiring is determined by a product of a circumference of the pulley calculated by an internal diameter of a groove of the measuring pulley and a diameter of the wire material to be measured and a rotation number counted by the distance measuring sensors to display the distance of the wiring on the tension display unit. With the above constitutions, a length (distance) of the wire material to be measured which is subjected to a pull-in operation or the like can be measured, and data of a relationship between the length (distance) of the wire material to be measured which is subjected to the pull-in operation or the like and the tension can also be managed. Further, monitoring a tension in a pull-in operation of the wire material to be measured can contribute to a check of a present construction quality and an improvement of a future construction quality, for example, how much tension was pulled the wire material to be measured with which size, how much curvature is curved the wire material, or how much tension is applied to the wire material.

A lower part of a groove in which the wire material to be measured in the measuring pulley is caused to pass is disposed to be located below an upper part of a groove in which the wire material to be measured in the guide pulley is caused to pass, and
the wire material to be measured caused to pass from the guide pulley reaches the lower part of the groove of the measuring pulley and is curved into almost a U shape by the measuring pulley to apply an upward pressure to a tension detecting sensor configuring the rotating shaft of the measuring pulley. In this case, the tension measuring device can be attached to any position where the wire material to be measured can pass through.

The rotating shaft of the measuring pulley and the rotating shaft of the guide pulley are installed between one pair of side plates disposed with a space, and the wire material to be measured is guided along the groove from the upper side of the guide pulley and guided along the lower part of the groove of the measuring pulley. In this case, the wire material to be measured can be easily loaded on the measuring pulley and the guide pulleys.

### Advantages

According to the invention, a tension measuring device which can be easily carried, maintenance of which can be easily performed, and which can measure a tension of a wire material to be measured to make it possible to prevent the wire material to be measured from being damaged can be provided.

The object of the invention and other objects, characteristic features, and advantages will become more clearly according to the following description of a mode for carrying out the invention with reference to the accompanying drawings.

### Brief Description of the Drawings.

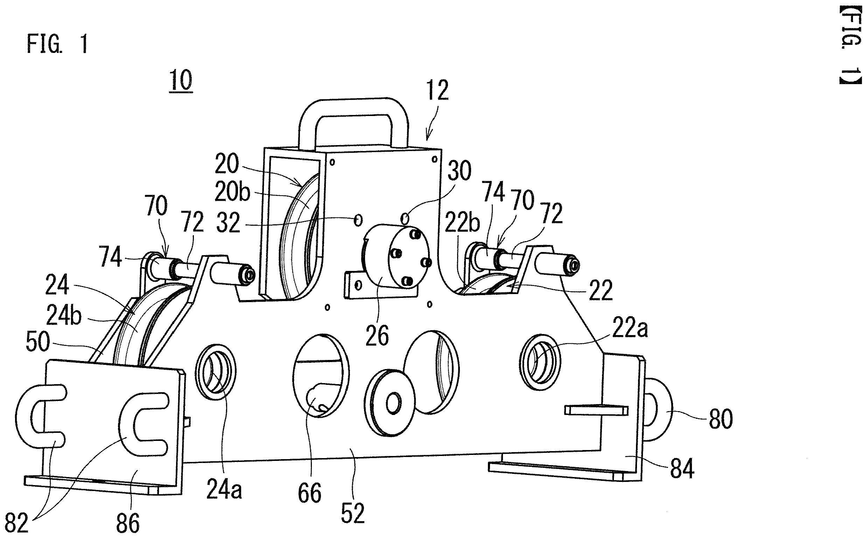

FIG. 1 is a schematic perspective view showing the outer shape of a tension measuring device according to the invention.

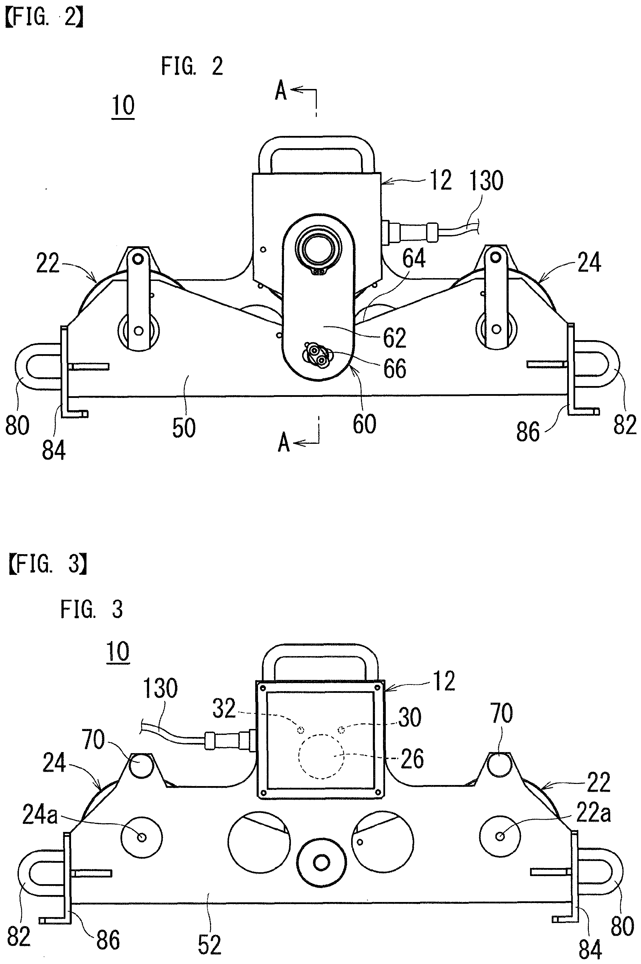

FIG. 2 is a front view of a tension measuring unit of the tension measuring device according to the invention.
FIG. 3 is a rear view of the tension measuring unit of the tension measuring device according to the invention.

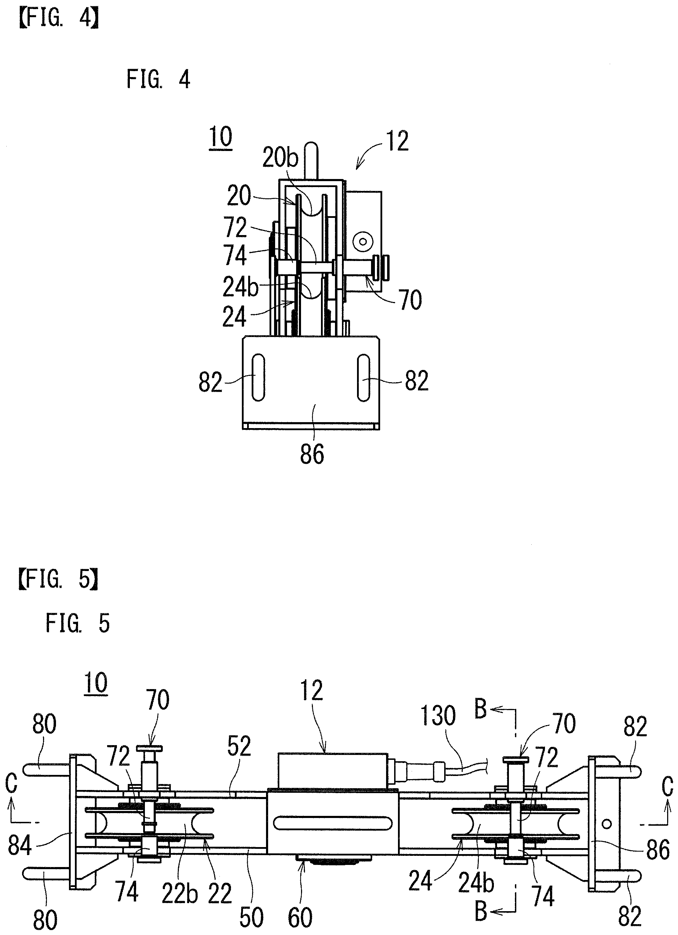

FIG. 4 is a side view of the tension measuring unit of the tension measuring device according to the invention.
FIG. 5 is a plan view of the tension measuring unit of the tension measuring device according to the invention.
FIG. 6 is a schematic view showing a using state of the tension measuring device according to the invention, and is a front schematic view thereof.
FIG. 7 is a schematic view showing a using state of the tension measuring device according to the invention, and is a plan schematic view thereof.

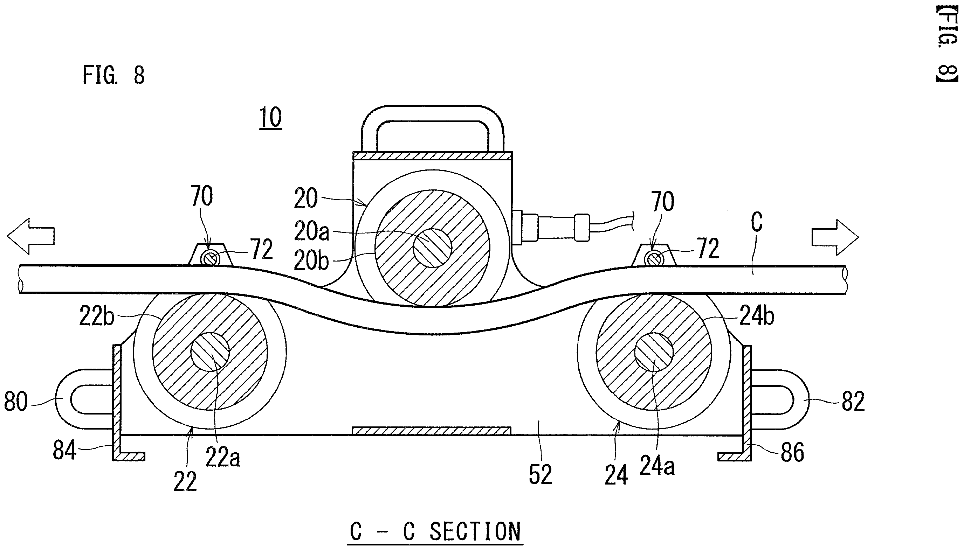

FIG. 8 is a schematic view showing a using state of the tension measuring device according to the invention, and is a sectional schematic view thereof.

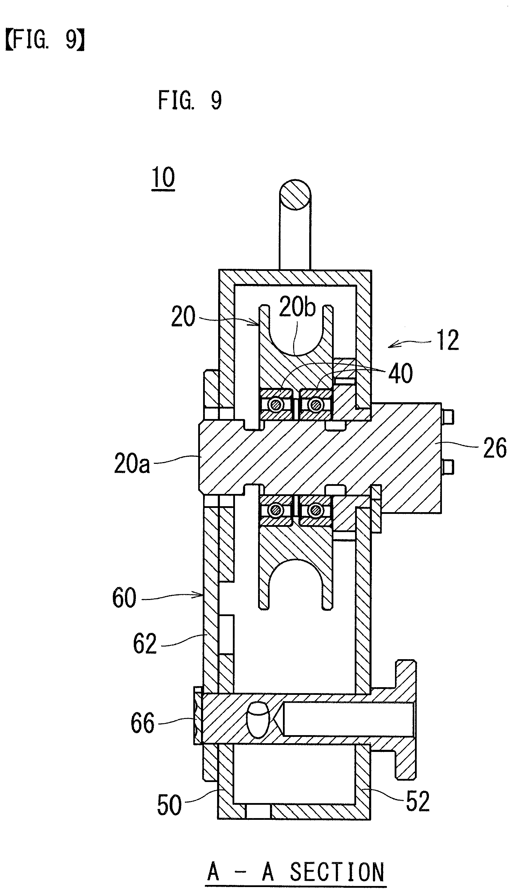

FIG. 9 is a schematic view showing a using state of the tension measuring device according to the invention, and is a sectional schematic view along a line A - A in FIG. 2.

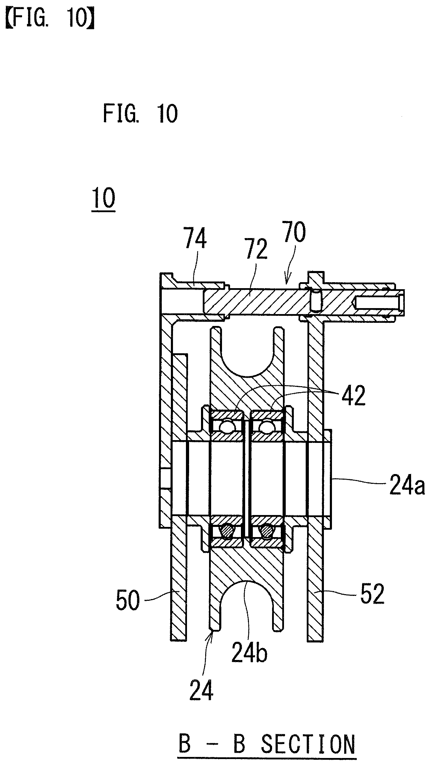

FIG. 10 is a schematic view showing a using state of the tension measuring device according to the invention, and is a sectional schematic view along a line B - B in FIG. 5.

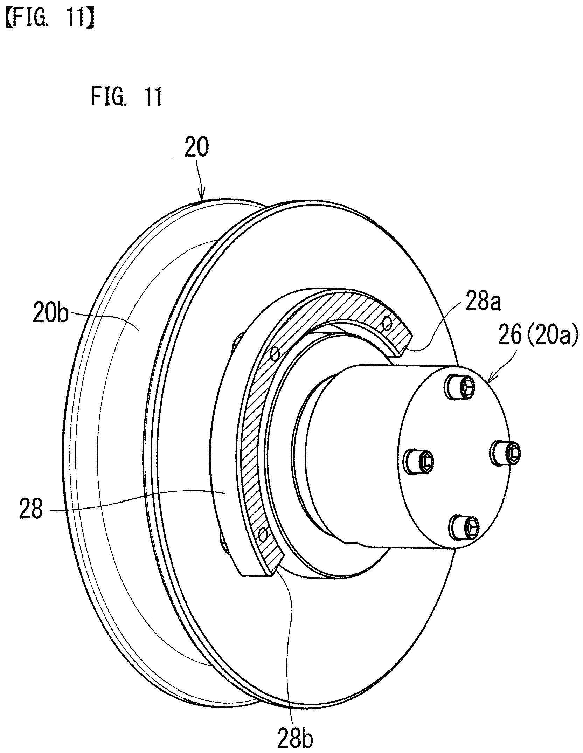

FIG. 11 is a schematic view showing a using state of the tension measuring device according to the invention, and is a schematic perspective view of a measuring pulley.

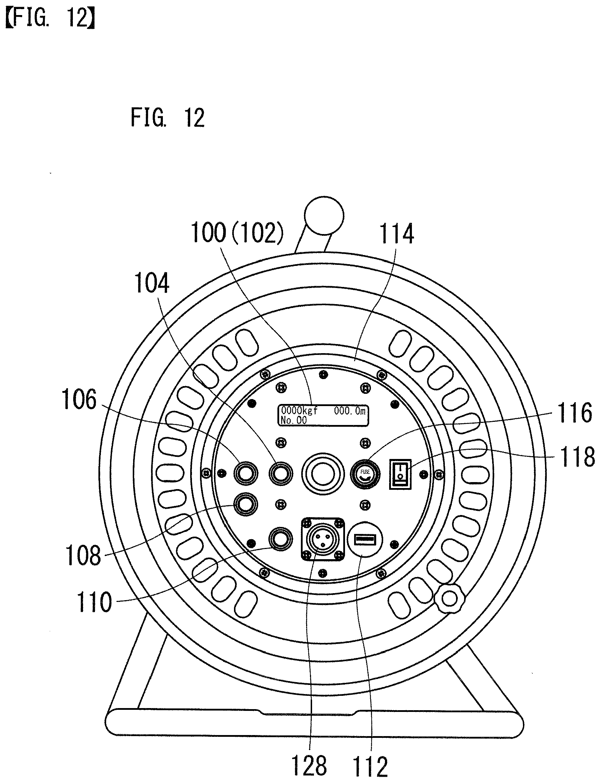

FIG. 12 is a front schematic view of a tension display unit of the tension measuring device according to the invention.

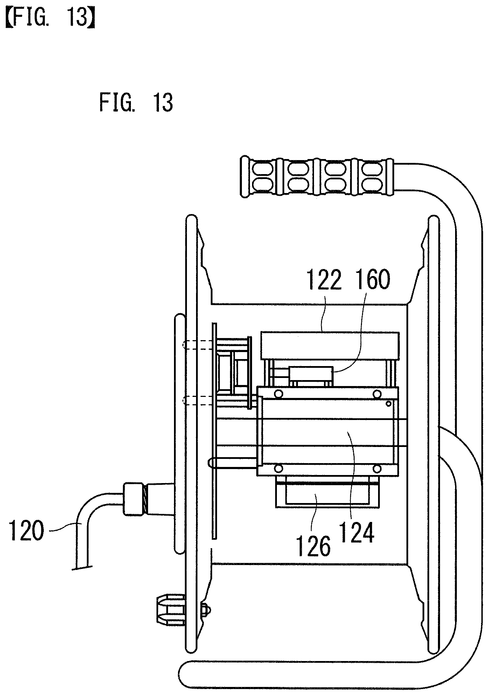

FIG. 13 is an internal block diagram of the tension display unit of the tension measuring device according to the invention.

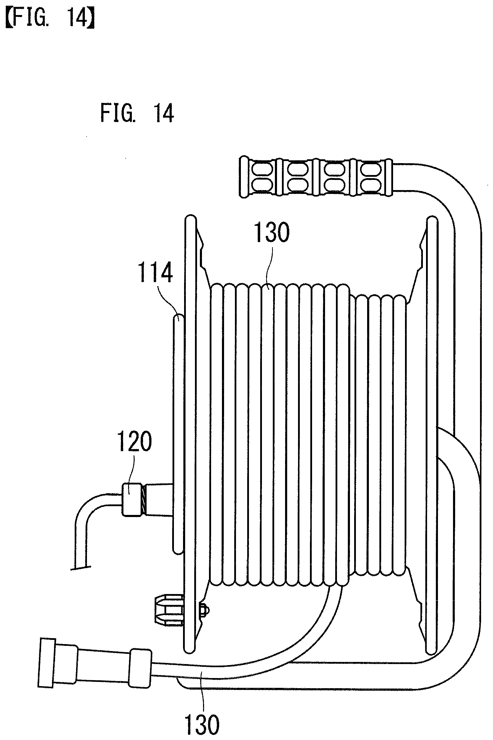

FIG. 14 is a side view of the tension display unit of the tension measuring device according to the invention.
FIG. 15 is a functional block diagram of the tension display unit of the tension measuring device according to the invention.
FIG. 16 is a flow chart showing determinations of a pull-out tension and a pull-out distance of the tension measuring device according to the invention.
FIG. 17 is a flow chart showing determinations of the pull-out tension and the pull-out distance of the tension measuring device according to the invention.
FIG. 18 is a schematic view showing a using method of the tension measuring device according to the invention.

### Modes for Carrying out the Invention

A linear tension measuring device 10 according to the present invention includes
a measuring pulley 20 measuring a wire material to be measured C while curving the wire material, a tension measuring unit 12 having one pair of guide pulley 22 and guide pulley 24 guiding the wire material to be measured C, and a tension display unit 14 separated from and electrically connected to the tension measuring unit 12.

The tension measuring device 10 is used to measure a pull-in tension when a cable serving as the wire material to be measured C is pulled into a pipe line or the like.

One guide pulley 22 and the other guide pulley 24 are disposed to be divided back and forth into an incoming side in which the wire material to be measured C comes into the tension measuring device 10 when the wire material to be measured C is pulled in and an outgoing side from which the wire material to be measured C comes out from the tension measuring device 10 to sandwich the measuring pulley 20 therebetween.

The tension measuring unit 12 is configured to curve the wire material to be measured C passing from the measuring pulley 20 to the guide pulley 24 through the guide pulley 22 at the measuring pulley 20, causes a tension detection sensor 26 configuring a rotating shaft 20a of the measuring pulley 20 to detect and convert force restoring the curved wire material to be measured C to the straight wire material into an electric signal, and transmit the electric signal to the tension display unit 14.

The tension display unit 14 is configured to receive the electric signal transmitted from the tension measuring unit 12 and to display the electric signal by a display unit 100.

The tension measuring device 12 is configured such that a rotating shaft 20a of the measuring pulley 20, a rotating shaft 22a of the guide pulley 22, and a rotating shaft 24a of the guide pulley 24 are installed between one pair of side plate 30 and side plate 32 disposed with a space, the wire material to be measured C is guided from the upper sides of a groove 22b of the guide pulley 22 and a groove 24b of the guide pulley 24 along the groove 22b and the groove 24b, and the wire material to be measured C is guided along the lower part of a groove 20b of the measuring pulley 20.

The tension measuring unit 12 is configured such that a lower part of the groove 20b in which the wire material to be measured C on the measuring pulley 20 is caused to pass is disposed to be located below upper parts of the groove 22b and the groove 24b in which the wire material to be measured C on the guide pulley 22 and the guide pulley 24 is caused to pass, the wire material to be measured C caused to pass through the guide pulley 22 reaches the lower part of the groove 20b of the measuring pulley 20 and is curved into almost a U shape by the measuring pulley 20, and an upward pressure is applied to the measuring pulley 20.

In the measuring pulley 20, a distance counter 28 is disposed around the rotating shaft 20a.

The distance counter 28 has a semicircular-arc shape to surround the periphery of the rotating shaft 20a, and a reaction unit 28a and a reaction unit 28b processed to react with edges of the distance measuring sensor 30 and the distance measuring sensor 32 are formed on the surface of the distance counter 28.

In the tension measuring unit 12, the distance measuring sensor 30 and the distance measuring sensor 32 are disposed to be divided back and forth to sandwich the rotating shaft 20a of the measuring pulley 20, and
with the rotation of the measuring pulley 20, the reaction unit 28a and the reaction unit 28b at the edge of the passing distance counter 28 are detected to count a rotation number.

Since the distance measuring sensor 30 and the other distance measuring sensor 32 are separated from each other, a moving direction of the wire material to be measured C is determined by an information processing means 150 of the tension display unit 14 (will be described later) before and after the wire material to be measured C passes to make it possible to determine a normal rotation and a reverse rotation of the measuring pulley 20.

The tension display unit 14 is configured to determine a distance (feeding distance) of a wiring is determined by a product of a circumference of the pulley 20 calculated by an internal diameter of the groove 20b of the measuring pulley 20 and a diameter of the wire material to be measured C and the rotation number counted by the distance measuring sensor 30 and the distance measuring sensor 32 to display the distance (feeding distance) of the wiring on the tension display unit 14.

The groove 20b, the groove 22b, and the groove 24b are formed in U shapes such that the wire material to be measured C is fitted in the grooves.

The groove 20b of the measuring pulley 20 is in parallel with the groove 22b of the guide pulley 22 and the groove 24b of the guide pulley 24 linearly in a plan view.

The rotating shaft 20a of the measuring pulley 20 is in parallel with the rotating shaft 22a of the guide pulley 22 and the rotating shaft 24a of the guide pulley 24.

To the measuring pulley 20, the tension detecting sensor 26 which is a converter which configures the rotating shaft 20a of the measuring pulley 20 and converts a magnitude of tension into an electric signal is attached.

The tension detecting sensor 26 is formed by a cantilevered pin-type load cell. One end of the tension detecting sensor 26 is attached to a side plate 52, and the other end is not fixed to a side plate 50 and is floated.

In the tension detection sensor 26, the measuring pulley 20 is attached to the periphery of the rotating shaft 20a through a bearing 40, and the rotating shaft 20a of the measuring pulley 20 and the bearing 40 are formed to configure a shaft serving as a center of rotary movement of the measuring pulley 20.

The tension detecting sensor 26 is configured to receive force (force restoring the wire material to be measured C to the straight wire material) applied upward from the wire material to be measured C to the rotating shaft 20a, convert the load into an electric signal, and to transmit the electric signal to the tension display unit 14.

The measuring pulley 20, the guide pulley 22, and the guide pulley 24 are rotatably held by the rotating shaft 20a, the rotating shaft 22a, and the rotating shaft 24a which are bridged between the side plate 50 on the front side and the side plate 52 on the rear side.

The groove 22b is formed in the guide pulley 22 in the circumferential direction, and the guide pulley 22 is attached to the rotating shaft 22a through the bearing 42.

The groove 24b is formed in the guide pulley 24 in the circumferential direction, and the guide pulley 24 is attached to the rotating shaft 24a through the bearing 42.

One guide pulley 22 and the other guide pulley 24 have the same shapes and are rotatably attached to the side plate 50 and the side plate 52 at the same height position.

In the side plate 50, on the front side of the measuring pulley 20, the wire material to be measured C is inserted from the front side into the lower part of the measuring pulley 20, and a disengagement preventing unit 60 regulating the wire material to be measured C loaded on the measuring pulley to prevent the wire material to be measured C from being disengaged from the measuring pulley 20 is formed.

The disengagement preventing unit 60 is configured by a suppressing piece 62 rotatably disposed near the rotating shaft 20a of the measuring pulley 20 on the side plate 50.

The suppressing piece 62 is configured to clog an insertion concave part 64 of the wire material to be measured C opened on the front side of the measuring pulley 20 formed on the side plate 50 and to rotate to open the insertion concave part 64.

The suppression piece 62 is suspensibly fixed to the side plate 50 by a topper 66 attached to the side plate 50.

On the side plate 50 and the side plate 52, above the guide pulley 22 and the guide pulley 24, a disengagement preventing unit 70 regulating the wire material to be measured C to prevent the wire material to be measured C from being disengaged from the guide pulleys 22 and 24 is formed.

The disengagement preventing unit 70 is configured by an installation pin 72 movably disposed on one side plate 52 and a pin fixing part 74 disposed at a position corresponding to the installation pin 72 on the other side plate 50.

The installation pin 72, above the guide pulley 22 and the guide pulley 24, is bridged between one side plate 50 and the other side plate 52 and movably disposed on the side plate 50 and the side plate 52 to close/open the upper part of the guide pulley 22 and the guide pulley 24.

A hooking part 80 is formed on one end of each of the side plate 50 and the side plate 52, and a hooking part 82 is formed on the other end.

The side plate 50 and the side plate 52 are coupled with each other with a predetermined space at one ends and the other ends by a coupler 84 and a coupler 86.

The hooking part 80 is fixed to the coupler 84, and the hooking part 82 is fixed to the coupler 86.

A rope or a wire is hooked on one hooking part 80 and pulled to one side, and a rope or a wire is hooked on the other hooking part 82 and pulled to the other side so as to prevent the tension measuring unit 12 of the tension measuring device 10 from moving during measuring.

The tension display unit 14 includes, on the outside, a measuring start/measuring stop button 104, a No. + button (wire to be measured selection) 106, an all-erase button 108, a storing button 110, a UBS memory connector 112, display unit damage preventing guard 114, a tension and feeding length display means (liquid crystal display unit) 102, a fuse 116, a power switch 118, an AC 100 V/240 V power supply cable 120, a microcomputer UPS board 122, a stabilized power supply (5 V, 24 V) 124, a load cell amplifier 126, an AC 100 V/240 V power supply connector 128, a sensor cable 130.

The No. + button (wire to be measured selection) 106 is to select the diameter of the wire material to be measured C.

The No. + button (wire to be measured selection) 106 is a switch to select number (No.) of data which can be measured and stored two or more times.

The USB memory connector 112 includes a dust-proof cap and is to connect the storing means (USB) 160.

In the display unit damage preventing guard 114, an annular convex part is formed to protect the surface of the display unit 100.

The microcomputer UPS board 122 configures a central processing unit (CPU) 152.

The load cell amplifier 126 is electrically connected to the tension detecting sensor 26 and disposed to amplify a signal from the tension detecting sensor 26.

The sensor cable 130 is to be connected to the tension measuring unit 12.

The tension and feeding length display means (liquid crystal display unit) 102 configures the display unit 100 to display a tension and a pull-out distance which are calculated by the information processing means 150 and the number and the diameter of the wire material to be measured C.

The measurement start/measurement stop button 104, the No. + button (wire to be measured selection) 106, an all-erase button 108, and a storing button 110 configure an input unit to transmit an electric signal, various pieces of information, and the like to the central processing unit (CPU) 152.

The tension display unit 14 internally includes an information processing means 150 to perform arithmetic processing of a pull-in tension (kgf), a pull-in distance (m), and the like which are generated when the wire material to be measured C is pull in the pipe line or the like.

The tension display unit 14 internally includes an information processing means 150 having the central processing unit (CPU) 152, the storing means (memory) 154, and the like, and, furthermore, is configured to be able to be externally detachably connected with a storing means (USB) 160 such as a USB memory.

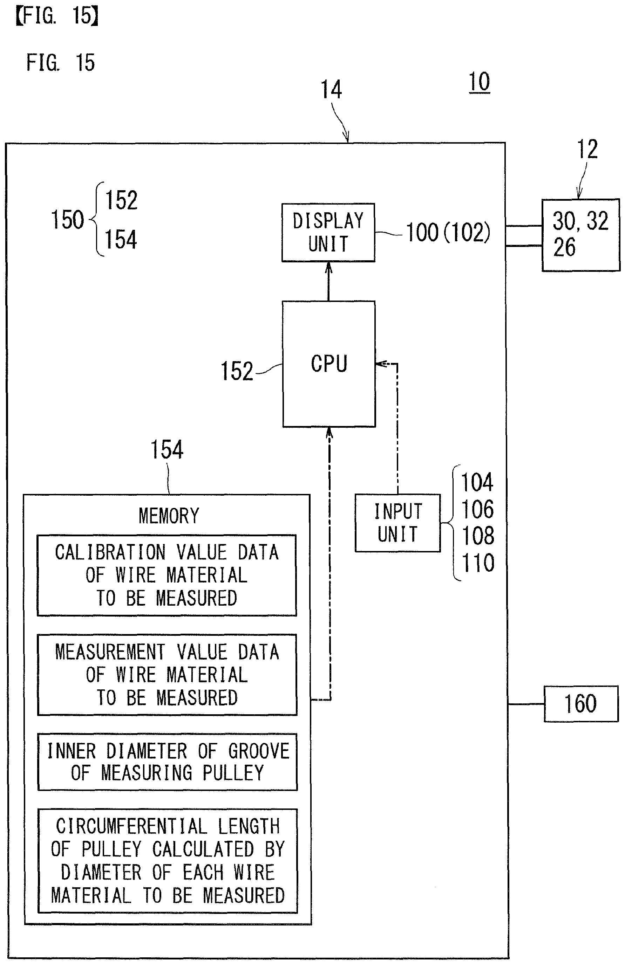

The functions of the tension display unit 14 of the invention will be described below mainly with reference to FIG. 15 showing a functional block diagram.

The information processing means 150 is configured to make it possible to connect the central processing unit (CPU) 152 having a tension detecting data input function, a tension calibrating function, a tension calculating function, a calculating function of a moving distance of the wire material to be measured C, a storing means (memory) 154, and an externally detachable storing means (USB) 160 to each other.

The information processing means 150 for each wire material to be measured C can backup calibration value data stored in the storing means (memory 154) in the storing means (USB) 160, and the storing means (memory) 154 stores the calibration value data and measurement value data.

The storing means (memory) 154 stores a total calibration value which is a result obtained by performing an actual load calibration test for diameters (for example, 12 mm, 16 mm, 18 mm, and 20 mm) of the wire materials to be measured C.

The storing means (memory) 154 stores, as shown in Table 1, a rotation number of the rotating shaft 20a of the measuring pulley 20 and a moving distance, i.e., a feeding distance, of the wire material to be measured C (for example, an actual distance 0.2953 m and error ratio (%) for rotation number 1).

**[Table 1]**

| Tension detection sensor 26 | | | | | Internal diameter = 82 mm | | | | | | | |
|---|---|---|---|---|---|---|---|---|---|---|---|---|
| LCD display distance [m] | ø12 | | | ø16 | | | ø18 | | | ø20 | | |
| | Actual distance [m] | Error ratio [%] | Rotation number | Actual distance [m] | Error ratio [%] | Rotation number | Actual distance [m] | Error ratio [%] | Rotation number | Actual distance [m] | Error ratio [%] | Rotation number |
| | 0.2953 | | 1 | 0.3079 | | 1 | 0.3142 | | 1 | 0.3204 | | 1 |
| 0.5 | 0.5906 | 18.1 | 2 | 06158 | 23.2 | 2 | 0.6284 | 25.7 | 2 | 0.6408 | 28.2 | 2 |
| 1.0 | 1.1812 | 18.1 | 4 | 1.2316 | 23.2 | 4 | 1.2568 | 25.7 | 4 | 1.2816 | 28.2 | 4 |
| 1.5 | 1.7718 | 18.1 | 6 | 1.5395 | 2.6 | 5 | 1.5710 | 4.7 | 5 | 1.6020 | 6.8 | 5 |
| 2.0 | 2.0671 | 3.4 | 7 | 2.1553 | 7.8 | 7 | 2.1994 | 10.0 | 7 | 2.2428 | 12.1 | 7 |
| 2.5 | 2.6577 | 6.3 | 9 | 2.7711 | 10.8 | 9 | 2.5136 | 0.5 | 8 | 2.5632 | 2.5 | 8 |

The storing means (memory) 154 stores data related to a product of a circumferential length of the measuring pulley 20 calculated by the inner diameter (diameter of 82 mm) of the groove of the measuring pulley 20 and the diameter (for example, 12 mm, 16 mm, 18 mm, and 20 mm) of each of the wire materials to be measured C and a rotation number of the measuring pulley 20 counted by the distance counter 28, the distance measuring sensor 30 and the distance measuring sensor 32.

The storing means (memory) 154 stores a load tension from the tension detecting sensor 26 and a calibration value of a load tension of the calibration tension detecting sensor acquired by performing another actual load calibration test for each of the diameter of the line materials to be measured C.

A calibration (calibration value) of the tension detection sensor 26 is a value (data) calculated by performing a tension test (so-called [actual load calibration test]) loading a tension detecting sensor for calibration in advance).

As the calibration values, values at points in a no-load state (0 kN) and values at two or more points near the maximum tension are stored. When the number of calibration values increases, measurement accuracy is improved.

The information processing means 150 also transfers or stores the calibration value data and measurement value data stored in the storing means (memory) 154 of the main body to the external detachable storing means (USB) 160.

The internal configuration of the tension display unit 14 according to Embodiment 1 will be described below mainly with reference to FIG. 15.

The central processing unit (CPU) 152 of the information processing means 150 executes programs of control and management of information from an input unit, analog/digital conversion control of an output signal from the tension detecting sensor 26, calculation of a tension, calculation of tension calibration, calculation of a distance of a wiring of the wire material to be measured C, calculation of a pull-in/feeding distance, management of the storing means (memory) 154, control/management of the display unit 100, and the like.

The central processing unit (CPU) 152 of the information processing means 150 causes the measuring pulley 20 to curve the wire material to be measured C, causes the tension detecting sensor 26 to measure upward force restoring the wire material to be measured C into a straight wire material, determines a tension signal transmitted by converting the load into an electric signal, determines a calibration value (data) approximated to the signal of the tension, and causes the tension and feeding length display means (liquid crystal display unit) 102 to display the calibration value (data).

The central processing unit (CPU) 152 of the information processing means 150 calculates a rotation number of the measuring pulley 20 by rotations of the reaction unit 28a and the reaction unit 28b of the distance counter 28 passing through one distance measuring sensor 30 and the other distance measuring sensor 32 with rotation of the measuring pulley 20, calculates a product of a circumferential length of the measuring pulley 20 calculated by the internal diameter of the internal groove diameter of the groove 20b of the measuring pulley 20 and the diameter of the wire material to be measured C and a rotation number of the measuring pulley 20, and causes the tension and feeding length display means (liquid crystal display unit) 102 to display a distance (pull-in/feeding distance) of the wiring of the wire material to be measured C.

Furthermore, the central processing unit (CPU) 152 executes programs of control of digital/analog conversion of a tension signal output, tension display and calculation of a tension, bus control of the tension and feeding length display means (liquid crystal display unit) 102, the central processing unit (CPU) 152 and the storing means (memory) 154, communication control such as programmable display unit communication or network communication, control of tension display for the tension and feeding length display means (liquid crystal display unit) 102, control of operations of setting changes by the measurement start/measurement stop button 104 and the display unit 100, memory management, and the like.

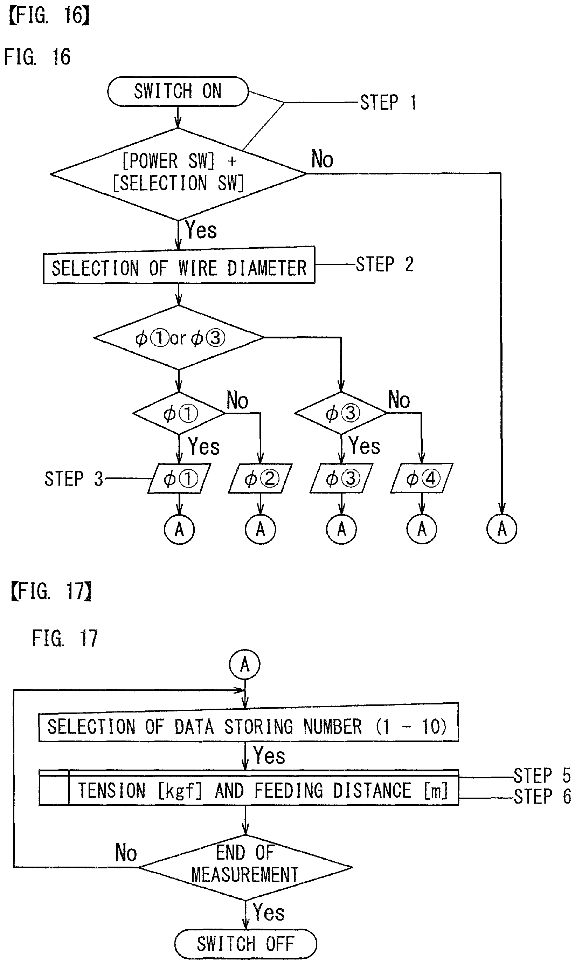

An operation of the tension measuring device 10 will be described below mainly with reference to FIG. 16 and FIG. 17.

The power switch 118 is turned on to turn on the measurement start/measurement stop button 104 (step 1).

The diameter of the wire material to be measured C or data (number) corresponding to the diameter is input by means of the No. + button (wire to be measured selection) 106 (step 2).

In this manner, a recording number and a diameter are displayed on the tension and feeding length display means (liquid crystal display unit) 102 (step 3).

The tension display unit 14 reads the input recording number or measurement data and calibration data corresponding to the diameter of the wire material to be measured C from the recording means (memory) 154 to collate a pull-in tension (kgf) detected by the tension detecting sensor 26 and transmitted with the calibration value (data) (step 4).

A calibration value (data) approximated to the pull-in tension (kgf) detected by the tension detecting sensor 26 is displayed on the tension and feeding length display means (liquid crystal display unit) 102 (step 5).

The information processing means 150 of the tension display unit 14 determines a distance of a wiring, i.e., a pull-in/feeding distance of the wire material to be measured C by a product of a circumferential length of the measuring pulley 20 calculated by the internal diameter of the groove 20b of the measuring pulley 20 and the diameter of the wire material to be measured C and a rotation number of the measuring pulley 20 counted by causing the reaction units 28a and 28b to pass through the distance measuring sensor 30 and the distance measuring sensor 32 in accordance with rotation of the measuring pulley 20 to display the pull-in/feeding distance of the wiring, i.e., the wire material to be measured C on the tension display unit 14 (step 6).

The information processing means 150 of the tension display unit 14 displays the pull-in/feeding distance (m) detected and calculated by the distance counter 28, the distance measuring sensor 30, and the distance measuring sensor 32 on the tension and feeding length display means (liquid crystal display unit) 102.

The information processing means 150 of the tension display unit 14 records the pull-in tension (kgf) and the pull-in/feeding distance (m) of the wire material to be measured C in the storing means (memory) 154.

According to the tension measuring device 10, during a pull-in operation of the wire material to be measured C into a pipe line or the like, an operator monitors a tension while watching the tension and feeding length display means (liquid crystal display unit) 102 and manages the tension to make it possible to prevent the wire material to be measured C from being damaged.

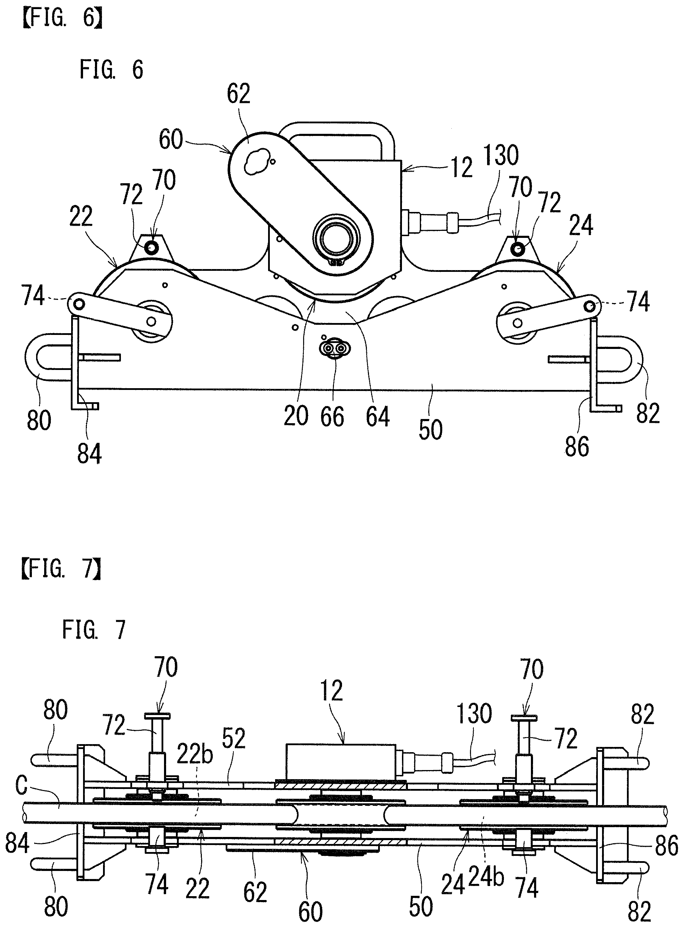

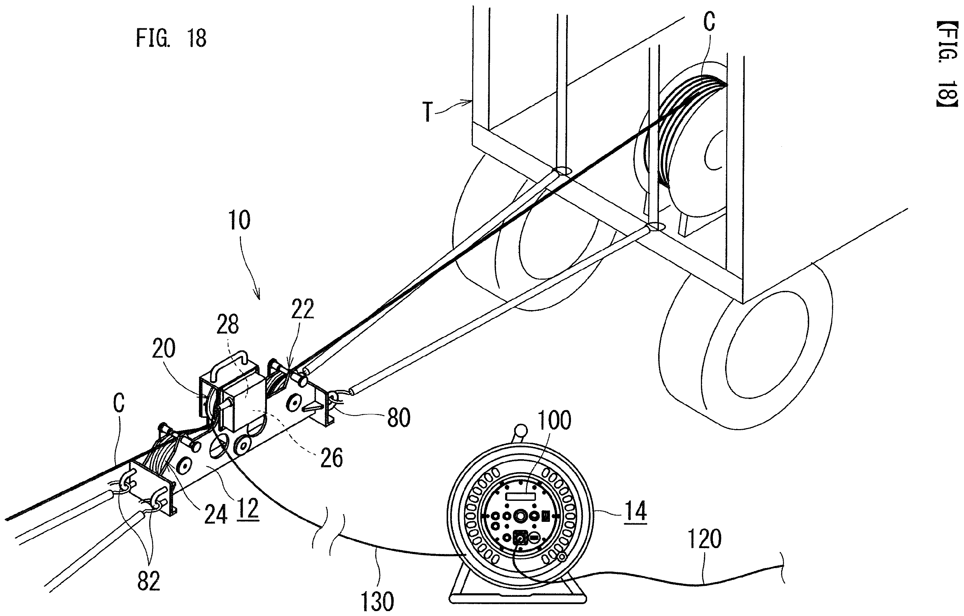

A using procedure of the tension measuring device 10 will be described below mainly with reference to FIG. 6 to FIG. 7 and FIG. 18.
(1) The power supply cable 120 of the tension display unit 14 is extended and inserted into a power generator (AC 100/240 V) or battery. Furthermore, the sensor cable 130 of the tension display unit 14 is extended and connected to the connector of the tension measuring unit 12.
(2) A wire of an extension car T is attached to the hooking part 80 and the hooking part 82 of the tension measuring unit 12, and the tension measuring unit 12 is stably fixed by using a gripper or the like.
(3) The tension display unit 14 is set at a position which can be easily seen by an operator of the extension car, and the power switch 118 of the tension display unit 14 is pressed to turn the power on.
(4) The No. + button (wire to be measured selection) 106 of the tension display unit 14 is pressed to set a recording No., the measurement start/measurement stop button 104 is pressed to display "measuring" on the tension and feeding length display means (liquid crystal display unit) 102 to start a pull-in operation.
   (The tension measuring unit 12 and the tension display unit 14 are backed up by the stabilized power supply (5 V, 24 V) 124 even though the power supply is disconnected during measurement to make it possible to continuously perform the measurement after the power supply is returned.)
(5) Upon completion of the pull-in operation of the wire material to be measured C, the measurement start/measurement stop button 104 of the tension display unit 14 is pressed to complete the measurement. (The data is automatically stored in the storing means (memory) 154.)
(6) Thereafter, 1 to 5 are repeated to perform the pull-in operation of the wire material to be measured C.
(7) Upon completion of the operation, the storing means (USB) 160 is inserted into the USB memory connector 112 of display unit 100, and the storing button 110 is pressed. At this time, when "writing is completed" is displayed on the tension and feeding length display means (liquid crystal display unit) 102, data transmission to the storing means (USB) 160 is completed.
(8) It confirmed that the data can be stored in the storing means (USB) 160. When the all-erase button 108 of display unit 100 is pressed to display "erase" on the tension and feeding length display means (liquid crystal display unit) 102, all the data are deleted. (The tension display unit 14 is configured such that the data is stored in the storing means (memory) 154 until the data is erased by pressing the all-erase button 108 even though the data is transferred to the storing means (USB) 160.)

The following configuration may be added to measure the diameter of the wire material to be measured C. Vertically above the upper concave part of the guide pulley 22 and the lower concave part of the measuring pulley 20, near both the sides of the measuring pulley 20, a transmission sensor and a reception sensor are added. As this sensor,
(1) linear light and a receiver therefor,
(2) a proximity sensor determining the presence/absence of a thing,
or the like is employed.

In the case of (1), linear light is irradiated from the front surface sandwiching the wire material to be measured C to detect the width of a light received by the rear surface or the width of a shadow so as to determine the diameter of the wire material to be measured C.

In the case of (2), when the presence/absence of the wire material to be measured C passing through the proximity sensor surface is determined to determine whether a specific sensor is present or absent, the diameter of the wire material to be measured C can be decided.

As described above, although the embodiment of the present invention is disclosed in the above description, the present invention is not limited to the description.

More specifically, the embodiment described above can be variously changed in mechanisms, shapes, materials, quantities, positions, arrangements, and the like without departing from the technical scope and the objects of the present invention, and the changes are included in the present invention.

### Industrial Applicability

The tension measuring device for a wire material according to the present invention can be used in a measurement of a tension of not only an electric wire such as a cable or a wire rope but also a long material such as a wide, strip-like, or a plate-like material.

### Reference Numerals

- 10: tension measuring device
- 12: tension measuring unit
- 14: tension display unit
- 20: measuring pulley
- 22, 24: guide pulley
- 20a, 22a, 24a: rotating shaft
- 20b, 22b, 24b: groove
- 26: tension detecting sensor
- 28: distance counter
- 28a, 28b: reaction unit
- 30, 32: distance measuring sensor
- 40, 42: bearing
- 50, 52: side plate
- 60: disengagement preventing unit
- 62: suppressing piece
- 64: insertion concave part
- 66: stopper
- 70: disengagement preventing unit
- 72: installation pin
- 74: pin fixing part
- 80, 82: hooking part
- 84, 86: coupler
- 100: display unit
- 102: tension and feeding length display means (liquid crystal display unit)
- 104: measurement start/measurement stop button
- 106: No. + button (wire to be measured selection)
- 108: all-erase button
- 110: storing button
- 112: USB memory connector
- 114: display unit damage preventing guard
- 116: fuse
- 118: power switch
- 120: AC 100/240 V power supply cable
- 122: microcomputer UPS board
- 124: stabilized power supply (5 V, 24 V)
- 126: load cell amplifier
- 128: AC 100 V/240 power supply connector
- 130: sensor cable
- 150: information processing means
- 152: central processing device (CPU)
- 154: storing means (memory)
- 160: storing means (USB)
- C: wire material to be measured
- T: extension car

## Claims

1. A tension measuring device for a wire material comprising:
a tension measuring unit having a measuring pulley measuring a wire material to be measured while being curved and one pair of guide pulleys guiding the wire material to be measured, and
a tension display unit electrically connected to the tension measuring unit, wherein
the guide pulleys are disposed to be divided back and forth into an incoming side and an outgoing side to sandwich the measuring pulley therebetween,
the tension measuring unit is configured to curve the wire material to be measured passing through the guide pulleys at the measuring pulley, convert force restoring the curved wire material to be measured to the straight wire material into an electric signal by a tension detecting sensor, and transmit the electric signal to the tension display unit, and
the tension display unit is configured to display the electric signal transmitted by the tension measuring unit by the disposed display unit.

2. The tension measuring device for a wire material according to claim 1, wherein
distance measuring sensors are disposed to be divided back and forth to sandwich a rotating shaft of the measuring pulley, and
a distance of a wiring is determined by a product of a circumference of the pulley calculated by an internal diameter of a groove of the measuring pulley and a diameter of the wire material to be measured and a rotation number counted by the distance measuring sensors to display the distance of the wiring on the tension display unit.

3. The tension measuring device for a wire material according to claim 1, wherein
a lower part of a groove in which the wire material to be measured in the measuring pulley is caused to pass is disposed to be located below an upper part of a groove in which the wire material to be measured in the guide pulley is caused to pass, and
the wire material to be measured caused to pass from the guide pulley reaches the lower part of the groove of the measuring pulley and is curved into almost a U shape by the measuring pulley to apply an upward pressure to a tension detecting sensor configuring the rotating shaft of the measuring pulley.

4. The tension measuring device for a wire material according to claim 1 or 3, wherein the rotating shaft of the measuring pulley and the rotating shaft of the guide pulley are installed between one pair of side plates disposed with a space, and the wire material to be measured is guided along the groove from the upper side of the guide pulley and guided along the lower part of the groove of the measuring pulley.
